# EUROPÄISCHE PATENTSCHRIFT

(11) **EP 2 871 052 B1**
(45) Veröffentlichungstag und Bekanntmachung des Hinweises auf die Patenterteilung: **23.06.2021**
(21) Anmeldenummer: 14190148.8
(22) Anmeldetag: 23.10.2014
(51) Int. Cl.: B32B 5/02, B32B 5/06, B32B 5/12, B32B 5/26, B32B 7/02, B32B 7/08, B32B 27/32, B32B 27/34, B32B 27/36, B32B 27/08, B29C 70/08

(54) **KFZ-INNENVERKLEIDUNGSTEIL**
MOTOR VEHICLE INTERIOR SECTION
PARTIE D'HABILLAGE INTÉRIEUR DE VÉHICULE

(30) Priorität: 28.10.2013 AT 506972013
(43) Veröffentlichungstag der Anmeldung: 13.05.2015
(73) Patentinhaber: Greiner Perfoam GmbH, 4550 Kremsmünster (AT)
(72) Erfinder: Draxler, Markus, 4040 Linz (AT); Lasch, Karl, 4482 Ennsdorf (AT)
(74) Vertreter: Burger, Hannes

(56) Entgegenhaltungen:
- EP-A2- 0 697 275
- US-A1- 2005 153 120
- None

## Beschreibung

Die Erfindung betrifft ein Kfz-Innenausstattungsbauteil aus einem einschichtigen, eine erste Lage, eine zweite Lage und eine zwischen der ersten und der zweiten Lage angeordneten Mittellage aufweisenden Faserverbundwerkstoff umfassend eine Matrix aus einem thermoplastischen Kunststoff in dem erste Fasern und weitere Fasern eingebettet sind, wobei die ersten Fasern in der ersten und der zweiten Lage eingebettet sind und ausgewählt sind aus einer Gruppe umfassend Glasfasern, glasartige Mineralfasern, Kohlefasern, Naturfasern, sowie Mischungen daraus, und die weiteren Fasern in der Mittellage angeordnet sind.

Aus der EP 0 657 281 B1 ist ein mehrlagiges Bauelement bestehend aus einem Kern aus einem Kunststoffschaum aus Primärmaterial und gegebenenfalls mit diesen verbundenen Flocken aus Kunststoffschaum und mindestens einer auf einer Oberfläche des Kerns angeordneten und mit dieser kraft- und formschlüssig verbundenen Deckschichte mit einem Tragkörper aus Fasern bzw. Fäden bekannt, wobei die Fasern bzw. Fäden des Tragkörpers in eine die Deckschichte bildende Schicht aus thermoplastischem Kunststoff eingebettet sind und über diese zumindest am Kern angeformt und kraft- bzw. formschlüssig mit diesem verbunden ist.

Die EP 0 697 275 A2 beschreibt einen biegesteifen, flächigen Faserverbundwerkstoff mit einer Dicke von 1,2 bis 3 mm, bestehend aus einer Thermoplastmatrix und Verstärkungsfasern. Der Faserverbundwerkstoff weist einen Aufbau aus zwei Deckschichten und einer Kernschicht auf. Die Deckschichten bestehen aus einem Glasfasergewebe mit einem Flächengewicht von jeweils 60 bis 800 g/m², eingebettet in eine Thermoplastmatrix, wobei der Glasfasergehalt 20 bis 60 Gew.-% beträgt, und die Kernschicht besteht aus einer Thermoplastmatrix, die gegebenenfalls bis zu 50 Gew.-% Glasfasern mit ungerichteter Faserorientierung enthalten kann.

Aus der US 2005/0153120 A1 ist ein mehrschichtiger Verbundwerkstoff aus einem faserverstärkten Substrat, das mit faserverstärkten Deckschichten versehen ist, bekannt. Die Fasern in den Deckschichten sind annähernd parallel zueinander orientiert.

Der vorliegenden Erfindung liegt die Aufgabe zugrunde, ein Kfz-Innenverkleidungsteil mit einem Flächengewicht von maximal 2.500 g/m² bereitzustellen, das eine hohe Drucksteifigkeit aufweist Die Erfindung wird durch Anspruch 1 definiert. Weitere Ausführungsformen der Erfindung sind in den Ansprüchen 2-8 definiert. Ausführungsformen, wie weiter unten beschrieben, die nicht in den Geltungsbereich der Ansprüche fallen, sind nicht Teil der Erfindung und dienen nur als Referenz.

Die Aufgabe der Erfindung wird bei dem eingangs genannten Kfz- Innenverkleidungsteil dadurch gelöst, dass die weiteren Fasern ausgewählt sind aus einer Gruppe umfassend Kunststofffasern und Naturfasern sowie Mischungen daraus, und die Mittellage ausschließlich die weiteren Fasern enthält, wobei der Anteil des thermoplastischen Kunststoffes in der Mittellage aus einem Bereich von 35 Gew.-% bis 45 Gew.-% ausgewählt ist und der Rest auf 100 Gew.-% durch die weiteren Fasern gebildet ist.

Von Vorteil ist dabei, dass die Mittellage im Vergleich zur Schaumstoffkernschicht nach dem voranstehend angeführten Stand der Technik eine höhere Festigkeit aufweist, wobei diese Festigkeit anhand des Faseranteils in gewissen Grenzen einstellbar ist. Damit wird einerseits der daran anschließenden Lage eine bessere Unterstützung gegeben, sodass das Kfz-Innenausstattungsbauteil eine höhere Druckfestigkeit aufweist. Trotzdem kann aufgrund des Faseranteils in der Mittellage ein relativ geringes Flächengewicht erreicht werden. Weiter wird aufgrund des Faseranteils der Mittellage auch das akustische Verhalten des Kfz-Innenausstattungsbauteils im Vergleich zum Schaumstoffkern des Bauteils der EP 0 657 281 B1 nicht über die Maße verschlechtert. Aufgrund der Fasereinlagen sowohl in der Mittellage als auch in der daran anschließenden Lage kann auch die Formbeständigkeit verbessert, da die Fasern zur Formstabilität des Kfz-Innenausstattungsbauteils beitragen, selbst wenn dieser einer erhöhten Temperatur ausgesetzt ist. Mit erhöhter Temperatur ist dabei selbstverständlich nicht gemeint, dass der Kfz-Innenausstattungsbauteil auf die Schmelz- bzw. Erweichungstemperatur des Kunststoffes erwärmt wird.

Im Rahmen der Erfindung wurde festgestellt, dass überraschenderweise die Druckfestigkeit mit einem Anteil des thermoplastischen Kunststoffes aus dem genannten Bereich deutlich verbessert werden kann. Es wird vermutet, dass es mit einer derartigen Zusammensetzung der Mittellage möglich ist, dass bei Druckbelastung die belastete Lage im belasteten Bereich teilweise in die Mittellage ausweichen kann, wobei ein Teil der Druckbelastung über die faserverstärkte Mittellage abgefangen werden kann.

Nach einer Ausführungsvariante des Kfz-Innenausstattungsbauteils ist vorgesehen, dass der auf die weiteren Fasern bezogene relative Anteil des thermoplastischen Kunststoffes in der Mittellage höher ist als der auf die ersten Fasern bezogene relative Anteil des thermoplastischen Kunststoffes in jeder der zwei Lagen, zwischen den die Mittellage angeordnet ist. Es wird damit erreicht, dass die Mittellage des Kfz-Innenausstattungsbauteils eine höhere Elastizität aufweist als die beiden anschließenden Lagen, wobei aber der Kfz-Innenausstattungsbauteil durch die beiden anschließenden Lagen ebenfalls eine entsprechende Drucksteifigkeit aufweist. Durch die höhere Elastizität der Mittellage kann der Bauteil höheren Durchbiegungen ausgesetzt werden, ohne dass das Kfz-Innenausstattungsbauteil vollständig bricht. Darüber hinaus wird damit aber auch eine Verbesserung der Schalldämmeigenschaften erreicht, da damit die Lagen ein unterschiedliches Schwingungsverhalten aufweisen können, wodurch ein größere Frequenzbereich eines Schallwellenspektrums abgedeckt werden kann.

Es kann weiter vorgesehen sein, dass zumindest ein Teil der weiteren Fasern eine geringere Zugfestigkeit aufweisen, als die ersten Fasern. Es wird damit erreicht, dass die Richtungsabhängigkeit der mechanischen Eigenschaften in der Mittellage reduziert wird. Zudem kann damit die Krafteinleitung in die an die Mittellage anschließende Schicht beeinflusst werden. Es kann damit vermieden werden, dass bei einer Überbelastung des Kfz-Innenausstattungsbauteils die Deckschichten vorzeitig einen Schaden erleiden. Somit ist es möglich, dass selbst wenn in der Mittellage bereits (Mikro)risse aufgetreten sind, dass das Kfz-Innenausstattungsbauteil weiter verwendbar ist und nicht ausgetauscht werden muss.

Die ersten Fasern sind ausgewählt aus einer Gruppe umfassend Glasfasern, glasartige Mineralfasern, Kohlefasern, Naturfasern sowie Mischungen daraus. Es kann damit den äußeren Lagen bzw. der Deckschicht eine hohe mechanische Festigkeit verliehen werden.

Weiter ist vorgesehen werden, dass die weiteren Fasern ausgewählt sind aus einer Gruppe umfassend Kunststofffasern und Naturfasern sowie Mischungen daraus. Es können damit für die Mittellage also im Wesentlichen kostengünstige Fasern verwendet werden, die lediglich in Art eines Füllstoffes wirken. Trotzdem wird aber durch die Fasereinlagerung in die Mittellage eine gewisse Verstärkung dieser Mittellage erreicht. Durch die Verwendung dieser Fasern in der Mittellage kann aber auch das Gewicht des Kfz-Innenausstattungsbauteils reduziert werden bzw. ist bei gleichem Gewicht eine höhere Schichtdicke des Kfz-Innenausstattungsbauteils realisierbar, falls dies gewünscht ist.

Bevorzugt sind die ersten Fasern zu zumindest 80 % in einer Richtung orientiert, sodass die mechanische Festigkeit des Kfz-Innenausstattungsbauteils besser an die Belastungsfälle angepasst werden kann. Es ist damit in weiterer Folge möglich, den Kfz-Innenausstattungsbauteil dünnwandiger auszuführen, wodurch insgesamt Gewicht eingespart werden kann. Die Gewichtsreduktion ist bekanntlich in der Kfz-Industrie ein entscheidender Faktor für die Reduktion des Treibstoffverbrauchs.

Es kann weiter vorgesehen sein, dass die weiteren Fasern zu zumindest 80 % in der Richtung der ersten Fasern orientiert sind, wodurch die mechanische Festigkeit in dieser Richtung weiter verbessert werden kann.

Vorzugsweise weisen die ersten Fasern und die weiteren Fasern eine Faserlänge von zumindest 20 mm auf, wodurch die Tragfähigkeit des Kfz-Innenausstattungsbauteils verbessert werden kann.

Die ersten Fasern und/oder die weiteren Fasern können vernadelt sein. Durch die Vernadelung wird ein besserer Zusammenhalt des Halbzeugs zur Herstellung des Kfz-Innenausstattungsbauteils erreicht. Darüber hinaus kann damit aber auch im fertigen Kfz-Innenausstattungsbauteil eine höhere Festigkeit durch verbesserten Kraftfluss erzielt werden.

Nach weiteren Ausführungsvarianten kann vorgesehen sein, dass zumindest ein Anteil der ersten Fasern bereichsweise in die Mittellage und/oder zumindest ein Anteil der weiteren Fasern bereichsweise in zumindest eine der an die Mittellage anschließenden Lagen ragen. Es wird damit dem Halbfertigfabrikat für die Manipulation währen der Herstellung des Kfz-Innenausstattungsbauteils ein besserer Zusammenhalt verliehen.

Zum besseren Verständnis der Erfindung wird diese anhand der nachfolgenden Figuren näher erläutert.

Es zeigen jeweils in schematisch vereinfachter Darstellung:
- Fig. 1: einen Ausschnitt aus einer ersten Ausführungsvariante eines Kfz-Innenausstattungsbauteils im Querschnitt;
- Fig. 2: einen Ausschnitt aus einem nicht unter den Schutzbereich fallenden Kfz-Innenausstattungsbauteil im Querschnitt;
- Fig. 3: einen Ausschnitt aus einem nicht unter den Schutzbereich fallenden Kfz-Innenausstattungsbauteil im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

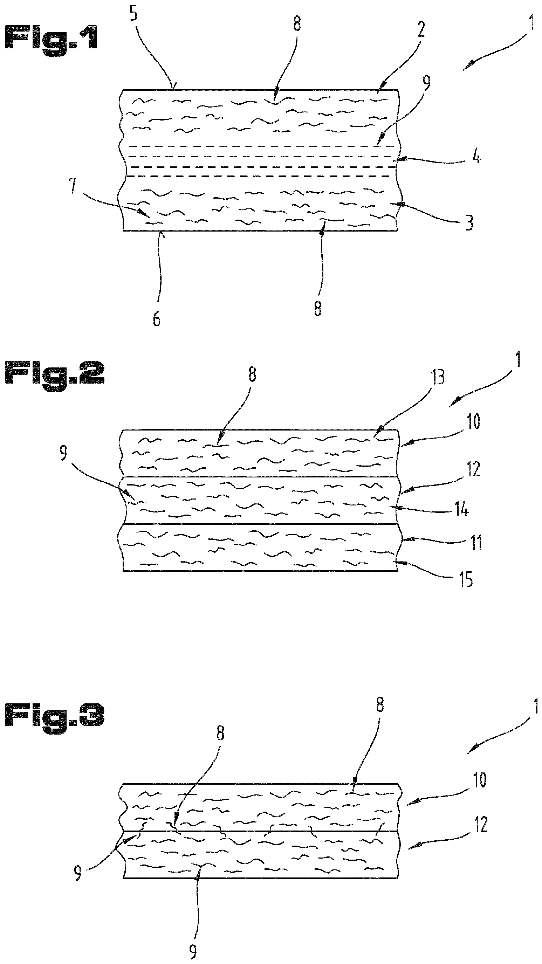

In Fig. 1 ist ein Ausschnitt aus einer ersten Ausführungsvariante eines Kfz-Innenausstattungsbauteils 1 im Querschnitt dargestellt. Das Kfz-Innenausstattungsbauteil 1 ist dabei einschichtig ausgebildet.

Das Kfz-Innenausstattungsbauteil 1 kann beispielsweise ein Autohimmel, eine Hutablage, eine Kofferraumauskleidung, ein Kofferraumboden bzw. ein Einlegeboden, etc. sein. Es werden darunter keine Kfz-Bauteile verstanden, die als Ersatz von Karosserieteilen ersetzt werden.

Insbesondere ist das Kfz-Innenausstattungsbauteil 1 also ein Bauteil, das im Fahrgastraum oder im Kofferraum angeordnet ist.

Das Kfz-Innenausstattungsbauteil 1 weist bzw. besteht aus eine(r) erste(n) Lage 2 und eine(r) zweite(n) Lage 3 auf. Zwischen diesen beiden Lagen 2, 3 ist eine Mittellage 4 ausgebildet. Die beiden Lagen 2, 3 können die Außenschichten des Kfz-Innenausstattungsbauteils 1 bilden. Es ist aber auch möglich, dass auf zumindest einer dieser Lagen 2, 3 an einer äußeren Oberfläche 5 und/oder 6 zumindest eine weitere Schicht angeordnet ist. Derartige Schichten sind insbesondere Dekorschichten, wie z.B. ein Filz, etc., wie dies für derartige Kfz-Innenausstattungsbauteile 1 aus dem Stand der Technik bekannt ist. Es soll mit dieser zumindest einen weiteren Schicht erreicht werden, dass die Lagen 2 bzw. 3 im eingebauten Zustand des Kfz-Innenausstattungsbauteils 1 nicht sichtbar sind.

Die Lagen 2, 3 und die Mittellage 4 sind aus einem Faserverbundwerkstoff gebildet bzw. bestehen aus diesem. Dieser Faserverbundwerkstoff weist eine Matrix 7 mit darin eingebetteten Fasern auf, wobei die Fasern durch erste Fasern 8 und weitere Fasern 9 gebildet werden. Dabei sind die ersten Fasern 8 in die erste und die zweite Lage 2, 3 eingebettet und die weiteren Fasern 9 in die Mittellage 4.

Insbesondere sind die ersten Fasern 8 und die weiteren Fasern 9 (in der Fläche des Kfz-Innenausstattungsbauteils 1 betrachtet) vollständig in die Matrix eingebettet.

Die Matrix besteht aus einem thermoplastischen Kunststoff. Insbesondere ist der thermoplastische Kunststoff ausgewählt aus einer Gruppe umfassend oder bestehend aus Polypropylen (PP), Polyamid (PA), Polyethylen (PE), Polyester.

Die ersten Fasern 8 sind ausgewählt sind aus einer Gruppe umfassend Glasfasern, glasartige Mineralfasern, Kohlefasern, Naturfasern, sowie Mischungen daraus.

Die zweiten Fasern 9 sind ausgewählt sind aus einer Gruppe umfassend Kunststofffasern und Naturfasern sowie Mischungen daraus.

Die Kunstfasern sind insbesondere Polyethylenterephthalat-Fasern (PET-Fasern), Polyesterfasern oder Polypropylenfasern.

Es sei darauf hingewiesen, dass die Matrix jedenfalls unterschiedlich ist zu den ersten und zweiten Fasern 8, 9.

Als Naturfasern werden bevorzugt verwendet Baumwollfasern, insbesondere Reißbaumwollfasern, Hanffasern, Kenaffasern, Flachsfasern.

Die Mittellage 4 weist als Fasern ausschließlich die weiteren Fasern 9 auf. Damit ergibt sich also innerhalb des Kfz-Innenausstattungsbauteils 1 eine Abfolge bezüglich der Fasern von erste Fasern 8, weitere Fasern 9, erste Fasern 8, betrachtet über den Querschnitt des Kfz-Innenausstattungsbauteils 1 wie er in Fig. 1 dargestellt ist.

Es sein in diesem Zusammenhang darauf hingewiesen, dass die weiteren Fasern 9 in Fig. 1 deutlich kürzer dargestellt sind als die ersten Fasern 8. Dies dient ausschließlich der besseren Darstellbarkeit des Unterschiedes zwischen diesen Fasern. Es kann jedoch daraus kein Rückschluss auf die tatsächlichen Gegebenheiten gezogen werden. Also ist nicht zwingend vorgesehen, dass die ersten Fasern 8 länger sind als die weiteren Fasern 9, wenngleich dies möglich ist.

Es sei darauf hingewiesen, dass, nachdem der Kfz-Innenausstattungsbauteil 1 nach Fig. 1 lediglich einen einzigen Matrixwerkstoff aufweist, die Unterscheidung der einzelnen Lagen innerhalb des Kfz-Innenausstattungsbauteils 1 nur über die ersten Fasern 8 bzw. die weiteren Fasern 9 möglich ist. Die Feststellung, dass eine Lage endet und eine andere Lage beginnt, kann dadurch getroffen werden, dass sich in diesem Bereich ein Übergang von den ersten Fasern 8 auf die weiteren Fasern 9 stattfindet. Sollte ein Zwischenbereich vorhanden sein, in dem keine Fasern enthalten sind, dieser also nur durch die Matrix 7 gebildet ist, wird die Schichtdicke dieses Bereichs jeweils zur Hälfte auf die beiden aneinandergrenzenden Lagen aufgeteilt.

Eine bevorzugte Ausführungsvariante des Kfz-Innenausstattungsbauteils 1 weist folgenden Aufbau auf (ohne fakultative Deckschichten bzw. Dekorschichten betrachtet, wie dies voranstehend ausgeführt wurde):
Lage 2: PP/Glasfasern und/oder Naturfasern
Mittellage 4: PP/PET (+ gegebenenfalls Baumwollfasern)
Lage 3: PP/Glasfasern und /oder Naturfasern

Wie aus diesem Beispiel hervorgeht ist es im Rahmen der Erfindung auch möglich, dass die Fasern einer Lage durch ein Fasergemisch gebildet sind. Beispielsweise können die weiteren Fasern 9 in der Mittellage 4 durch ein Gemisch aus PET-Fasern und Baumwollfasern gebildet sein. Ebenso ist es möglich, dass die ersten Fasern 8 der Lage(n) 2, 3 durch ein Gemisch von Glasfasern und Kohlefasern gebildet sind. Es ist dabei möglich, dass nur eine der beiden Lagen 2, 3 ein derartiges Gemisch aufweist und die jeweils andere Lage 2, 3 sortenreine erste Fasern 8 aufweist.

Der Anteil an ersten Fasern 8 in der ersten Lage 2 kann aus einem Bereich ausgewählt sein von 25 Gew.-% bis 40 Gew.-%. Den Rest auf 100 Gew.-% in dieser ersten Lage bildet die Matrix 7 aus dem thermoplastischen Kunststoff.

Der Anteil an ersten Fasern 8 in der zweiten Lage 3 kann aus einem Bereich ausgewählt sein von 25 Gew.-% bis 40 Gew.-%. Den Rest auf 100 Gew.-% in dieser ersten Lage bildet die Matrix 7 aus dem thermoplastischen Kunststoff.

Der Anteil an weiteren Fasern 9 in der Mittellage 3 ist aus einem Bereich von 55 Gew.-% bis 65 Gew.-% ausgewählt. Den Rest auf 100 Gew.-% in dieser Lage bildet die Matrix 7 aus dem thermoplastischen Kunststoff. Insbesondere kann der Anteil an weiteren Fasern 9 in der Mittellage 3 aus einem Bereich von 55 Gew.-% bis 62 Gew.-% ausgewählt sein.

Demzufolge kann der Anteil der Matrix 7 an der Mittellage zwischen 35 Gew.-% und 45 Gew.-% betragen.

Für den Fall das die ersten Fasern 8 aus einem Fasergemisch aus zwei Faserarten bestehen, kann ein erster Anteil der ersten Faserart zwischen 70 Gew.-% und 85 Gew.-% betragen, bezogen auf die Gesamtzusammensetzung der ersten und/oder zweiten Lage 2, 3. Den Rest des Gesamtfaseranteils bilden die Fasern der zweiten Faserart. Beispielsweise kann das Fasergemisch aus 70 Gew.-% bis 85 Gew.-% PP und 15 Gew.-% bis 30 Gew.-% Polyesterfasern bestehen. Die Angaben zu den Anteilen beziehen sich dabei auf das Fasergemisch.

Für den Fall das die weiteren Fasern 9 aus einem Fasergemisch aus zwei Faserarten bestehen, kann ein erster Anteil der ersten Faserart zwischen 20 Gew.-% und 60 Gew.-%, insbesondere zwischen 20 Gew.-% und 40 Gew.-%, betragen, bezogen auf die Gesamtzusammensetzung der Mittellage 9. Den Rest des voranstehend genannten Gesamtfaseranteils bilden die Fasern der zweiten Faserart.

Es kann also beispielsweise die Mittellage 9 40 Gew.-% PP, 30 Gew.-% PET-Fasern und 30 Gew.-% Baumwollfasern aufweisen.

Es ist auch möglich für die ersten Fasern 8 und/oder insbesondere für die weiteren Fasern 9 Recyclatwerkstoffe zu verwenden, also Werkstoffe, die aus der Wiederaufbereitung von Werkstoffen stammen.

Die Herstellung des Kfz-Innenausstattungsbauteils 1 kann derart erfolgen, dass die ersten Fasern 8 und die weiteren Fasern 9 mit einem Kunststoffgranulat aus dem thermoplastischen Kunststoff für die Matrix 7 versehen werden und dieses Gemisch in der Folge in eine Formpresse eingelegt wird, in der der Kunststoff aufgeschmolzen wird, und damit die Fasern in die Matrix 7 eingebettet werden. Die Formgebung erfolgt bevorzugt unter Druck.

Anstelle der Verwendung eines Kunststoffgranulats werden jedoch bevorzugt Fäden aus dem thermoplastischen Kunststoff verwendet, die zusammen mit den ersten Fasern 8 und den weiteren Fasern 9 zu einem Vlies verarbeitet werden. Dieses Vlies wird in der Folge wiederum in einer Formpresse unter Hitze und Druck zum Kfz-Innenausstattungsbauteil 1 geformt, wobei die Fasern aus dem thermoplastischen Kunststoff aufschmelzen und die Matrix 7 bilden.

Weiter ist es möglich, dass die Fasern 8, 9 nicht als Vlies verarbeitet werden, sondern als Einzelfasern.

Die Verwendung eines Vlieses hat jedoch den Vorteil, dass es einfacher verarbeitbar ist und dass die Faserdichte bzw. Fadendichte relativ gering ist, wodurch die Benetzung der Fasern 8, 9 mit dem thermoplastischen Kunststoff einfacher und besser durchgeführt werden kann.

Es ist dabei möglich, dass jeweils getrennte Vliese aus den ersten Fasern 8 und den Kunststofffasern für die Matrix bzw. den weiteren Fasern und den Kunststofffasern für die Matrix gebildet werden und aus diesen Vliesen in der Folge die gewünschte Abfolge der Lagen durch aufeinanderlegen der Vliese hergestellt wird.

Es ist weiter möglich, dass das Kfz-Innenausstattungsbauteil 1 zumindest eine weitere faserverstärkte Lage aufweist, die anschließend an die erste Lage 2 und/oder die zweite Lage 3 ausgebildet ist bzw. sind. Die Matrix 7 dieser weiteren Lagen wird wiederum durch den thermoplastischen Kunststoff gebildet, der auch die Matrix 7 der ersten Lage 2, der zweiten Lage 3 und der Mittellage 4 bildet. Die Fasern dieser weiteren Lage(n) können jedoch zu den Fasern in der ersten Lage 2 und/oder den Fasern der zweiten Lage 3 und/oder der Mittellage 4 unterschiedlich sein.

Es sei in diesem Zusammenhang erwähnt, dass die Fasern 2. 8 der ersten Lage 2 unterschiedlich sind zu den Fasern 8 der zweiten Lage 3.

Weiter ist es möglich, dass die Mittellage 4 zumindest zwei Teilmittellagen aufweist bzw. durch diese gebildet ist, wobei sich diese zumindest zwei Teilmittellagen ebenfalls nur durch die eingesetzten Fasern unterscheiden. Die Teilmittellagen können dabei auch eine unterschiedliche Flächenausbreitung aufweisen. So ist es z.B. möglich, dass sich eine der zumindest zwei Teilmittellagen nur über einen Bruchteil der Fläche der anderen Teilmittellage erstreckt. Es ist damit in diesem Bereich eine entsprechende Anpassung der mechanischen Eigenschaften an ein gewünschtes Eigenschaftsprofil des Kfz-Innenausstattungsbauteils 1 möglich.

Unter einer Teilmittellage wird dabei eine Lage der Mittellage 4 verstanden (im Querschnitt betrachtet wie in Fig. 1 dargestellt) die von einer weiteren Lage der Mittellage 4 wiederum aufgrund von unterschiedlichen weiteren Fasern 9 unterscheidbar ist, wobei die weiteren Fasern 9 jeder Teilmittellage aus der voranstehend genannten Gruppe dazu ausgewählt sind und jede Teilmittellage keine Fasern enthält, die in der Gruppe für die ersten Fasern 8 voranstehend angeführt sind.

In der Fig. 2 ist ein nicht unter den Schutzbereich fallendes Kfz-Innenausstattungsbauteils 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung zu der Fig. 1 hingewiesen bzw. Bezug genommen.

Dargestellt ist in Fig. 2 wiederum ein Ausschnitt aus dem Kfz-Innenausstattungsbauteil 1 im Querschnitt.

Das Kfz-Innenausstattungsbauteil 1 nach Fig. 2 unterscheidet sich von jenem nach Fig. 1, dass jenes nach Fig. 2 mehrschichtig ausgebildet ist, und somit nicht under den Schutzbereich fällt. Im konkreten Ausführungsbeispiel weist das Kfz-Innenausstattungsbauteil 1 - über den Querschnitt betrachtet - eine erste Deckschicht 10, eine zweite Deckschicht 11 und eine zwischen diesen angeordnete Kernschicht 12 auf bzw. besteht aus diesen Schichten. Die Kernschicht 12 ist insbesondere unmittelbar anliegend an die erste Deckschicht 10 und die zweite Deckschicht 11 angeordnet und mit diesen verbunden.

Es besteht auch die Möglichkeit, dass das Kfz-Innenausstattungsbauteil 1 nur eine der beiden Deckschichten 10, 11 aufweist.

Des Weiteren besteht wiederum die Möglichkeit, dass die Kernschicht 12 und/oder die erste Deckschicht 10 und/oder die zweite Deckschicht 11 aus mehreren/zumindest zwei Teilschichten gebildet ist. Diesbezüglich gelten hinsichtlich der ersten Fasern 8, die in den Deckschichten 10 und gegebenenfalls 11 eingebettet sind, und den weiteren Fasern 9, die in der Kernschicht 12 eingebettet sind, voranstehende Ausführungen.

Generell sei bezüglich der ersten Fasern 8 und der weiteren Fasern 9 auf voranstehende Ausführungen verwiesen, insbesondere hinsichtlich der Art der Fasern 8, 9 und des Anteils dieser Fasern 8, 9 am Kfz-Innenausstattungsbauteil 1.

Mit dem Ausdruck "Kernschicht" ist nicht automatisch inkludiert, dass diese Kernschicht vollständig von den Deckschichten 10, 11 umgeben ist, sondern kann die Kernschicht 10 an den Stirnseiten des Kfz-Innenausstattungsbauteils 1 sichtbar sein. Die vollständige Einbettung der Kernschicht 12 zwischen den Deckschichten 10, 11 ist jedoch möglich.

Durch den mehrschichtigen Aufbau ist es möglich, dass nicht nur die Fasern innerhalb des Kfz-Innenausstattungsbauteils 1 unterschiedlich sind, wie dies zu Fig. 1 ausgeführt wurde, sondern dass zudem für die Schichten unterschiedliche Matrixwerkstoffe verwendet werden, dass also beispielsweise die erste Deckschicht 10 eine erste Matrix 13 aus einem ersten thermoplastischen Kunststoff, die Kernschicht 12 eine zweite Matrix 14 aus einem zweiten thermoplastischen Kunststoff und die zweite Deckschicht 11 eine dritte Matrix 5 aus einem dritten thermoplastischen Kunststoff aufweisen.

Es ist aber auch möglich, dass die verwendeten Kunststoffe für die erste Matrix 13 und die dritte Matrix 15 ident sind.

Es ist weiter möglich, dass der thermoplastische Kunststoff der Deckschicht(en) 10, 11 und der thermoplastische Kunststoff der Kernschicht 12 aus dem gleichen Polymer bestehen, also dass die verwendeten Kunststoffe für die erste Matrix 13, die zweite Matrix 14 und die dritte Matrix 15 ident sind.

Hinsichtlich der Werkstoffauswahl für den oder die matrixbildende thermoplastische Kunststoffe sei auf voranstehende Ausführungen zur Matrix 7 verwiesen.

Das Kfz-Innenausstattungsbauteil 1 kann also beispielsweise folgenden, nicht under den Schutzbereich fallenden Aufbau aufweisen:
Erste Deckschicht 10: PP/Glasfasern
Kernschicht 12: PP/PET (+ gegebenenfalls Baumwollfasern)
Zweite Deckschicht 11: PP/Glasfasern

Falls unterschiedliche thermoplastische Kunststoffe verwendet werden, wird vorzugsweise für die Kernschicht 12 PET und für die Deckschicht(en) 10, 11 PP verwendet.

Es besteht die Möglichkeit der Anordnung zumindest einer weiteren Schicht auf dem Kfz-Innenausstattungsbauteil 1, insbesondere von Dekorschichten, wie dies voranstehend ausgeführt wurde.

Hergestellt kann dieses Kfz-Innenausstattungsbauteils 1 ebenfalls auf einem der voranstehend ausgeführten Wege.

In der Fig. 3 ist ein nicht unter den Schutzbereich fallendes Kfz-Innenausstattungsbauteils 1 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung zu den Fig. 1 und 2 hingewiesen bzw. Bezug genommen.

Gezeigt ist in Fig. 3 wiederum ein Ausschnitt aus einem Querschnitt des Kfz-Innenausstattungsbauteils 1.

Der Kfz-Innenausstattungsbauteil 1 ist zweischichtig ausgeführt und weist die erste Deckschicht 10 und die Kernschicht 12 auf bzw. besteht aus diesen, sodass also die Kernschicht 12 eine Randschicht des Kfz-Innenausstattungsbauteils 1 bildet, falls keine weiteren Schichten, wie insbesondere Dekorschichten, angeordnet sind.

Neben diesem Unterschied zum Kfz-Innenausstattungsbauteil 1 nach Fig. 2 ist auch vorgesehen, dass zumindest ein Anteil der ersten Fasern 8 bereichsweise in die die Kernschicht 12 und/oder zumindest ein Anteil der weiteren Fasern 9 bereichsweise in die Deckschicht 10 ragen. Es wird auf diesem Weg erreicht, dass die Fasern 8, 9 am Zusammenhalt der einzelnen Schichten mitwirken, also der Verbund nicht ausschließlich über den oder die thermoplastischen Kunststoff(e) der Schichten erreicht wird. Dies kann beispielsweise erreicht werden, indem vor der Einlegen der Vliese in eine Formgebungseinrichtung mit Nadeln durchstoßen wird, entweder ein- oder beidseitig, als von oben und/oder von unten, sodass einzelne Fasern 8 und/oder 9 teilweise jeweils in das andere Vlies gestoßen werden.

Eine derartige Ausführungsvariante ist auch bei dem Kfz-Innenausstattungsbauteil 1 nach Fig. 1 möglich, sodass dabei zumindest ein Anteil der ersten Fasern 8 bereichsweise in die Mittellage 4 und/oder zumindest ein Anteil der weiteren Fasern 9 bereichsweise in zumindest eine der an die Mittellage 4 anschließenden Lagen 2, 3 ragen. In diesem Fall wird zur Bestimmung der Lagen so vorgegangen, dass die Mischzone, also jene Zone in der sowohl die ersten als auch die weiteren Fasern 8, 9 vorhanden sind, jeweils zu 50 % auf die Mittellage 4 und die jeweils betroffene Lage 2 und/oder 3 aufgeteilt wird, um die Mengenanteile der einzelnen Bestandteile der Lagen zu bestimmen.

Vorsorglich sei darauf hingewiesen, dass folgende Ausführungen ebenso für sämtliche Ausführungsvarianten des Kfz-Innenausstattungsbauteils 1 gelten, auch wenn nicht gesondert auf die einzelnen Ausführungsvarianten hingewiesen wird.

Es kann vorgesehen sein, dass der auf die weiteren Fasern 9 bezogene relative Anteil des thermoplastischen Kunststoffes in der Mittellage 4 höher ist als der auf die ersten Fasern 8 bezogene relative Anteil des thermoplastischen Kunststoffes in jeder der zwei Lagen 2, 3. Mit anderen Worten ausgedrückt weist also die Mittellage 4 einen geringeren Anteil an Fasern auf als die daran anschließenden Lagen oder Schichten. Zur Bestimmung des relativen Harzanteils der Mittellage 4 wird wie voranstehend dazu bzgl. der Aufteilung bzw. der Unterscheidung der Lagen des Kfz-Innenausstattungsbauteils 1 vorgegangen.

Beispielsweise kann die Mittellage 4 einen im Vergleich zu den Lagen 2, 3 um 30 % bis 40 % geringeren Anteil an thermoplastischer Matrix aufweisen, als jede der Lagen 2, 3.

Es kann also die erste Lage 2 einen Anteil an thermoplastischer Matrix von 60 Gew.-%, die zweite Lage 3 einen Anteil an thermoplastischer Matrix von 60 Gew.-% und die Mittellage 4 einen Anteil an thermoplastischer Matrix von 40 Gew.-% aufweisen. Den Rest auf 100 Gew.-% bilden in den beiden Lagen 2, 3 die Fasern 8 und in der Mittellage 4 die Fasern 9.

Es ist dabei auch möglich, dass der Harzanteil der in Einbaulage äußeren, ersten Lage 2 größer oder kleiner ist, als der Harzanteil der zweiten Lage 3.

Weiter kann vorgesehen werden, dass zumindest ein Teil der oder die gesamten weiteren Fasern 9 eine geringere Zugfestigkeit aufweisen, als die ersten Fasern 8.

Beispielsweise können die ersten Fasern 8 eine Zugfestigkeit ausgewählt aus einem Bereich von 1.000 N/mm² bis 5.000 N/mm², insbesondere ausgewählt aus einem Bereich von 1.500 N/mm² bis 3.000 N/mm², aufweisen.

Die weiteren Fasern 9 können eine Zugfestigkeit ausgewählt aus einem Bereich von 200 N/mm² bis 1.000 N/mm², insbesondere ausgewählt aus einem Bereich von 300 N/mm² bis 700 N/mm², aufweisen.

Vorzugsweise ist vorgesehen, dass die ersten Fasern 8 zu zumindest 80 %, insbesondere zu zumindest 90 %, in einer Richtung orientiert sind. Dazu können die Fasern mit einer Krempel oder Kardiermaschine entsprechend ausgerichtet werden. Es ist dabei auch möglich, dass für den Fall, dass der thermoplastische Kunststoff für die Matrix 7, 13, 15 ebenfalls faserförmig eingesetzt wird, diese Fasern mit ausgerichtet werden.

Es ist weiter bevorzugt, wenn auch die weiteren Fasern 9 zu zumindest 80 %, insbesondere zu zumindest 90 %, in der Richtung der ersten Fasern 8 orientiert sind. Dazu können sie derselben Behandlung unterworfen werden wie die ersten Fasern 8.

Für den Fall, dass die ersten Fasern 8 und/oder die weiteren Fasern 9 in Form eines Vlieses eingesetzt werden, wird also bevorzugt kein Wirrlagevlies verwendet.

Die verwendeten ersten Fasern 8 und/oder weiteren Fasern 9 weisen vorzugsweise eine Faserlänge von zumindest 20 mm auf. Es werden also bevorzugt keine Kurzfasern eingesetzt. Die ersten Fasern 8 und/oder weiteren Fasern 9 können in Form von Langfasern mit einer Faserlänge von mindestens 50 mm oder als Endlosfasern eingesetzt werden.

Es ist dabei möglich, dass die ersten Fasern 8 eine größere Faserlänge aufweisen als die weiteren Fasern 9. Insbesondere können die ersten Fasern 8 um 20 % bis 50 % länger sein als die weiteren Fasern 9, wobei als Bezugspunkt die Faserlänge der weiteren Fasern 9 herangezogen wird.

Mit Faserlänge ist dabei das arithmetische Mittel aus 50 Fasern 8 bzw. Fasern 9 gemeint.

Im Falle des Einsatzes von Kunststofffasern, wie z.B. PET-Fasern, können insbesondere uniaxial gereckte Fasern verwendet werden.

Es ist weiter möglich, dass die ersten Fasern 8 und/oder die weiteren Fasern 9 vernadelt sind.

Zudem ist es möglich, dass sich die ersten Fasern 8 nicht nur hinsichtlich ihrer Faserlänge von den weiteren Fasern 9 unterscheiden. Es ist alternativ dazu oder zusätzlich dazu möglich, dass die ersten Fasern 8 einen im Vergleich mit den weiteren Fasern 9 unterschiedlichen Querschnitt aufweisen. Insbesondere können die ersten Fasern 8 einen größeren Durchmesser aufweisen, als die weiteren Fasern 9.

Im Rahmen von durchgeführten Tests wurde ein Autohimmel hergestellt dessen dreilagiges Kernmaterial, also ohne aufgebrachte Kaschierung, folgenden Aufbau aufwies.

Lage 2: 60 Gew.-% PP, 40 Gew.-% Glasfasern
Mittellage 4: 40 Gew.-% PP, 30 Gew.-% PET, 30 Gew.-% Reißbaumwolle
Lage 3: 60 Gew.-% PP, 40 Gew.-% Glasfasern
Dieses Kernmaterial wies nach der Verpressung eine Schichtdicke von 2 mm auf.

Generell kann die Schichtdicke des Kfz.-Innenverkleidungsteils 1 zwischen 2 mm und 3,5 mm betragen.

Das Flächengewicht des Kernmaterials (also ohne übliche Dekorbeschichtung) betrug 600 g/m².

Generell beträgt das Flächengewicht des Kernmaterials vorzugsweise zwischen 600 g/m² und 1200 g/m². Mit der Dekorschicht kann das Kfz-Innenverkleidungsteil 1 zwischen 1600 g/m² und 2200 g/m² betragen.

Das Kernmaterial wie eine Brennrate von unter 100 mm/min auf.

Der Ordnung halber sei abschließend darauf hingewiesen, dass zum besseren Verständnis des Aufbaus Kfz-Innenausstattungsbauteils 1 dieser bzw. dessen Bestandteile teilweise unmaßstäblich und/oder vergrößert und/oder verkleinert dargestellt wurden.

### Bezugszeichenaufstellung

1 Kfz-Innenausstattungsbauteil
2 Lage
3 Lage
4 Mittellage
5 Oberfläche
6 Oberfläche
7 Matrix
8 Faser
9 Faser
10 Deckschicht
11 Deckschicht
12 Kernschicht
13 Matrix
14 Matrix
15 Matrix

## Patentansprüche

1. Kfz-Innenausstattungsbauteil (1) aus einem einschichtigen, eine erste Lage (2), eine zweite Lage (3) und eine zwischen der ersten und der zweiten Lage (2, 3) angeordneten Mittellage (4) aufweisenden Faserverbundwerkstoff umfassend eine Matrix (7) aus einem thermoplastischen Kunststoff in dem erste Fasern (8) und weitere Fasern (9) eingebettet sind, wobei die ersten Fasern (8) in der ersten und der zweiten Lage (2, 3) eingebettet sind und ausgewählt sind aus einer Gruppe umfassend Glasfasern, glasartige Mineralfasern, Kohlefasern, Naturfasern, sowie Mischungen daraus, und die weiteren Fasern (9) in der Mittellage angeordnet sind, **dadurch gekennzeichnet, dass** die weiteren Fasern (9) ausgewählt sind aus einer Gruppe umfassend Kunststofffasern und Naturfasern sowie Mischungen daraus, und die Mittellage (4) als Fasern ausschließlich die weiteren Fasern (9) enthält, wobei der Anteil des thermoplastischen Kunststoffes in der Mittellage (4) aus einem Bereich von 35 Gew.-% bis 45 Gew.-% ausgewählt ist und der Rest auf 100 Gew.-% durch die weiteren Fasern (9) gebildet ist.

2. Kfz-Innenausstattungsbauteil (1) nach Anspruch 1, **dadurch gekennzeichnet, dass** der auf die weiteren Fasern (9) bezogene relative Gewichtsanteil des thermoplastischen Kunststoffes in der Mittellage (4) höher ist als der auf die ersten Fasern (8) bezogene relative Gewichtsanteil des thermoplastischen Kunststoffes in jeder der zwei Lagen (2, 3).

3. Kfz-Innenausstattungsbauteil (1) nach Anspruch 1 oder 2, **dadurch gekennzeichnet, dass** zumindest ein Teil der weiteren Fasern (9) eine geringer Zugfestigkeit aufweisen, als die ersten Fasern (8).

4. Kfz-Innenausstattungsbauteil (1) nach einem der Ansprüche 1 bis 3, **dadurch gekennzeichnet, dass** die ersten Fasern (8) zu zumindest 80 % in der gleichen Richtung orientiert sind.

5. Kfz-Innenausstattungsbauteil (1) nach Anspruch 4, **dadurch gekennzeichnet, dass** die weiteren Fasern (9) zu zumindest 80 % in der Richtung der ersten Fasern (8) orientiert sind.

6. Kfz-Innenausstattungsbauteil (1) nach einem der Ansprüche 1 bis 5, **dadurch gekennzeichnet, dass** die ersten Fasern (8) und die weiteren Fasern (9) eine Faserlänge von zumindest 20 mm aufweisen.

7. Kfz-Innenausstattungsbauteil (1) nach einem der Ansprüche 1 bis 6, **dadurch gekennzeichnet, dass** die ersten Fasern (8) und/oder die weiteren Fasern (9) vernadelt sind.

8. Kfz-Innenausstattungsbauteil (1) nach einem der Ansprüche 1 bis 7, **dadurch gekennzeichnet, dass** zumindest ein Anteil der ersten Fasern (8) bereichsweise in die Mittellage (4) und/oder zumindest ein Anteil der weiteren Fasern (9) bereichsweise in zumindest eine der an die Mittellage (4) anschließenden Lagen (2, 3) ragen.

## Claims

1. A motor vehicle interior trim component (1) made from a single-layer fiber composite having a first layer (2) and a second layer (3) and a middle layer (4) arranged between the first and the second layer (2, 3), comprising a matrix (7) made from a thermoplastic material, in which first fibers (8) and further fibers (9) are embedded, wherein the first fibers (8) are embedded in the first and the second layer (2, 3) and are selected from a group comprising glass fibers, glassy mineral fibers, carbon fibers, natural fibers and mixtures thereof, and the further fibers (9) are arranged in the middle layer, **characterized in that** the further fibers (9) are selected from a group comprising plastic fibers and natural fibers and mixtures thereof, and the middle layer (4) comprises exclusively the further fibers (9) as fibers, wherein the proportion of the thermoplastic material in the middle layer (4) is selected from a range of 35 wt.% to 45 wt.% and the rest is formed at 100 wt.% by the further fibers (9).

2. The motor vehicle interior trim component (1) according to claim 1, **characterized in that** in the middle layer (4), the relative weight proportion of the thermoplastic material in relation to the further fibers (9) is higher than the relative weight proportion of the thermoplastic material in relation to the first fibers (8) in each of the two layers (2, 3).

3. The motor vehicle interior trim component (1) according to claim 1 or 2, **characterized in that** at least a portion of the further fibers (9) has a lower tensile strength than the first fibers (8).

4. The motor vehicle interior trim component (1) according to one of claims 1 to 3, **characterized in that** at least 80% of the first fibers (8) are oriented in the same direction.

5. The motor vehicle interior trim component (1) according to claim 4, **characterized in that** at least 80% of the further fibers (9) are oriented in the direction of the first fibers (8).

6. The motor vehicle interior trim component (1) according to one of claims 1 to 5, **characterized in that** the first fibers (8) and the further fibers (9) have a fiber length of at least 20 mm.

7. The motor vehicle interior trim component (1) according to one of claims 1 to 6, **characterized in that** the first fibers (8) and/or the further fibers (9) are needle-punched together.

8. The motor vehicle interior trim component (1) according to one of claims 1 to 7, **characterized in that** at least a proportion of the first fibers (8) protrude, in some areas, into the middle layer (4) and/or at least a proportion of the further fibers (9) protrudes, in some areas, in at least one of the layers (2, 3) connecting to the middle layer (4).

## Revendications

1. Composant d'équipement intérieur de véhicule automobile (1) en matériau composite à fibres monocouche, comportant une première strate (2), une deuxième strate (3) et une strate médiane (4) disposée entre la première et la deuxième strate (2, 3), et comprenant une matrice (7) en matière synthétique thermoplastique dans laquelle sont noyées des premières fibres (8) et d'autres fibres (9), les premières fibres (8) étant noyées dans la première et la deuxième strate (2, 3) et étant sélectionnées dans un groupe comprenant des fibres de verre, des fibres minérales vitreuses, des fibres de carbone, des fibres naturelles ainsi que des mélanges de ces différentes fibres, et les autres fibres (9) étant disposées dans la strate médiane, **caractérisé en ce que** les autres fibres (9) sont sélectionnées dans un groupe comprenant des fibres de matière synthétique et des fibres naturelles ainsi que des mélanges de ces différentes fibres, et la strate médiane (4) contient en tant que fibres exclusivement les autres fibres (9), la proportion de la matière synthétique thermoplastique dans la strate médiane (4) étant sélectionnée dans une plage de 35 %-poids à 45 %-poids, et le complément à 100 %-poids étant formé par les autres fibres (9).

2. Composant d'équipement intérieur de véhicule automobile (1) selon la revendication 1, **caractérisé en ce que** la proportion en poids relative, rapportée aux autres fibres (9), de la matière synthétique thermoplastique dans la strate médiane (4) est plus élevée que la proportion en poids relative, rapportée aux premières fibres (8), de la matière synthétique thermoplastique dans chacune des deux strates (2, 3).

3. Composant d'équipement intérieur de véhicule automobile (1) selon la revendication 1 ou 2, **caractérisé en ce qu'**au moins une partie des autres fibres (9) présente une résistance à la traction plus faible que les premières fibres (8).

4. Composant d'équipement intérieur de véhicule automobile (1) selon l'une des revendications 1 à 3, **caractérisé en ce que** les premières fibres (8) sont orientées à au moins 80 % dans la même direction.

5. Composant d'équipement intérieur de véhicule automobile (1) selon la revendication 4, **caractérisé en ce que** les autres fibres (9) sont orientées à au moins 80 % dans la direction des premières fibres (8).

6. Composant d'équipement intérieur de véhicule automobile (1) selon l'une des revendications 1 à 5, **caractérisé en ce que** les premières fibres (8) et les autres fibres (9) présentent une longueur de fibre d'au moins 20 mm.

7. Composant d'équipement intérieur de véhicule automobile (1) selon l'une des revendications 1 à 6, **caractérisé en ce que** les premières fibres (8) et/ou les autres fibres (9) sont aiguilletées.

8. Composant d'équipement intérieur de véhicule automobile (1) selon l'une des revendications 1 à 7, **caractérisé en ce qu'**au moins une proportion des premières fibres (8) fait par endroits saillie dans la strate médiane (4) et/ou au moins une proportion des autres fibres (9) fait par endroits saillie dans au moins une des strates (2, 3) raccordées à la strate médiane (4).
